# EUROPEAN PATENT APPLICATION

(11) **EP 4 800 795 A1**
(43) Date of publication of application: **02.09.2026**
(21) Application number: 25786860.4
(22) Date of filing: 12.03.2025
(51) Int. Cl.: H01M 10/056, H01M 10/0565, H01M 10/0562, H01M 10/0585, H01M 10/052

(54) **COMPOSITE SOLID ELECTROLYTE AND ALL-SOLID-STATE BATTERY COMPRISING SAME**

(30) Priority: 11.04.2024 KR 20240048815
(71) Applicant: LG Energy Solution, Ltd., Seoul 07335 (KR)
(72) Inventor: NAM, Sung Hyun, Daejeon 34122 (KR); KIM, Dong Kyu, Daejeon 34122 (KR)
(74) Representative: BCKIP Part mbB
(86) International application number: PCT/KR2025/099677
(87) International publication number: WO 2025/216620

(57) **Abstract**

The present disclosure relates to a composite solid electrolyte and an all-solid-state battery comprising the same. The composite solid electrolyte includes: a polymer including a non-crosslinkable PEO (polyethylene oxide)-based copolymer having a predetermined branched structure; a lithium salt; and a ceramic compound, wherein the lithium salt and the ceramic compound are dispersed in the polymer.

## Description

### [TECHNICAL FIELD]

### CROSS-REFERENCE TO RELATED APPLICATION(S)

The present application claims priority to and the benefit of Korean patent application no. KR 10-2024-0048815, filed on April 11, 2024, the entire contents of which are incorporated herein by reference.

The present disclosure relates to a composite solid electrolyte and an all-solid-state battery comprising the same.

### [BACKGROUND]

Lithium-ion batteries that use a liquid electrolyte have a structure in which the positive electrode and the negative electrode are divided by a separator, so if the separator is damaged by deformation or external impact, a short circuit may occur, which can lead to risks such as overheating or explosion. Therefore, the development of a solid electrolyte that can ensure safety in the field of lithium-ion secondary batteries can be said to be a very important task.

Lithium secondary batteries using solid electrolytes have the advantage of increasing the safety of the battery, improving the reliability of the battery by preventing electrolyte leakage, and making it easy to manufacture thin batteries. In addition, lithium metal can be used as a negative electrode, which can improve energy density. Accordingly, it is expected to be applied to small secondary batteries as well as highcapacity secondary batteries, such as those for electric vehicles, and is attracting attention as a next-generation battery.

Among solid electrolytes, polymer solid electrolytes can be made of ionconducting polymer materials, and can optionally be used in the form of a composite solid electrolyte that mixes these polymer materials with inorganic materials.

Such a conventional hybrid (composite) solid electrolyte is produced by dispersing inorganic powders such as oxide-based ceramics in a polymer matrix. The conventional solid electrolyte has higher ignition and combustion stability compared to existing liquid electrolytes, and has higher ionic conductivity compared to existing polymer solid electrolytes. However, the existing composite solid electrolytes exhibit difficulties in fulfilling the basic prerequisites, such as improving the dispersibility of oxide-based ceramic particles within the polymer matrix and optimizing the physical properties of the polymer matrix used. In particular, when using a polymer including a highly crystalline unit such as polyethylene oxide (PEO) or polypropylene oxide (PPO) as a matrix, there is a problem in that it is difficult to produce a composite solid electrolyte with improved ionic conductivity. In other words, due to the high crystallinity of the PEO or PPO-based polymer, not only the chain mobility of the polymer chain is inhibited and the dispersibility of the oxide-based ceramics or the like is reduced, but also there are restrictions on the movement of lithium ions inside the composite solid electrolyte. As a result, there has been a limitation to improvement of the ionic conductivity of the composite solid electrolyte. In addition, when additional plasticizers or dispersants are used to improve the dispersibility of the ceramics or the like, it is limited that electrochemical properties deteriorate and a process becomes complicated.

In particular, it has been known that it is not easy to ensure an ionic conductivity of 0.1 mS/cm or more at room temperature when applying conventional composite solid electrolyte production techniques.

Additionally, when a (block) copolymer including a polypropylene oxide (PPO) unit is used as the polymer matrix, this polymer matrix is prepared in a gas phase and a composite solid electrolyte is formed through a gas phase-liquid phase reaction, which causes problems in processes, such as the overall electrolyte preparation process becoming complicated and the thickness control of the solid electrolyte membrane becoming difficult. Furthermore, the PPO-based polymer matrix has a large shrinkage during molding, is easy to cause aging, and has poor impact resistance at low temperatures, so that the composite solid electrolyte produced using this matrix may also be insufficient in physical properties.

### [DETAILED DESCRIPTION OF THE INVENTION]

### [Technical Problem]

The present disclosure provides a composite solid electrolyte that can be produced through a simplified process and exhibits improved ionic conductivity by more uniformly dispersing a ceramic compound, a lithium salt, and the like in a polymer.

Further, the present disclosure provides an all-solid-state battery that exhibits improved ionic conductivity.

### [Technical Solution]

According to certain aspects, there is provided a composite solid electrolyte comprising: a polymer including a non-crosslinkable PEO (polyethylene oxide)-based copolymer having a branched structure containing repeating units of the following Formulas 1 and 2; a lithium salt; and a ceramic compound, wherein the lithium salt and the ceramic compound are dispersed in the polymer, and wherein the ceramic compound is included in an amount of 10 to 45 parts by weight based on 100 parts by weight of the polymer. 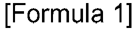 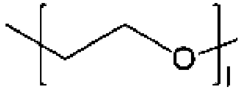 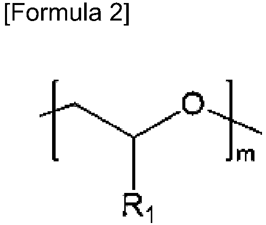
wherein in Formulas 1 and 2, R₁ represents -CH₂-O-(CH₂-CH₂-O)ₖ-R₃, where k is 0 to 20, and R₃ represents an alkyl group having a carbon number from 1 to 5, and
l and m are the number of the repeating units, and are each independently an integer from 1 to 100000.

In the composite solid electrolyte according to one specific embodiment, the ceramic compound may comprise an oxide-based solid electrolyte of lithium metal oxide or lithium metal phosphate, and more specifically, it may comprise one or more oxide-based solid electrolytes selected from the group consisting of a lithium-lanthanum-zirconium oxide (LLZO)-based compound, a lithium-silicon-titanium phosphate (LSTP)-based compound, a lithium-lanthanum-titanium oxide (LLTO)-based compound, a lithium-aluminum-titanium phosphate (LATP)-based compound, a lithium-aluminum-germanium phosphate (LAGP)-based compound, and a lithium-lanthanum-zirconium-titanium oxide (LLZTO)-based compound.

According to certain embodiments, the lithium salt may be included in an amount of 10 to 40 parts by weight based on 100 parts by weight of the polymer.

According to certain embodiments, the above-mentioned composite solid electrolyte may be provided in a dry film state that does not contain a liquid.

According to certain other aspects, there is provided a method for producing a composite solid electrolyte. This production method comprises the steps of: forming a mixed solution including a polymer containing a non-crosslinkable PEO (polyethylene oxide)-based copolymer having a branched structure containing repeating units of the Formulas 1 and 2; a lithium salt and a ceramic compound; and casting the mixed solution and drying it to mold in the form of a film.

According to further aspects, there is provided an all-solid-state battery comprising an electrolyte layer including a composite solid electrolyte of certain embodiments described above. The all-solid-state battery may comprise: a positive electrode including a positive electrode active material; a negative electrode including a negative electrode active material; and an electrolyte layer interposed between the positive electrode and the negative electrode and including the composite solid electrolyte.

### [Advantageous Effects]

The composite solid electrolyte according to the present disclosure disperses a certain amount of a ceramic compound and a lithium salt in a non-crosslinkable PEO-based polymer matrix having a branched structure, so that the ceramic compound or the like can be uniformly distributed without aggregation between components and aggregation between particles. As a result, the ceramic compound or the like can be uniformly dispersed while reducing the influence of the crystallinity of linear polymers, etc., thereby exhibiting improved ionic conductivity.

Furthermore, due to the excellent dispersibility of the polymer matrix, the composite solid electrolyte can be produced through a simplified process of mixing each component to form it in a liquid state, and then casting the mixture in a film state, thereby exhibiting excellent processability and mass productivity.

### [DETAILED DESCRIPTION OF THE EMBODIMENTS]

Hereinafter, specific embodiments will be described in more detail for a better understanding of the present disclosure.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Conventionally, in order to improve the ionic conductivity of the solid electrolyte, a composite solid electrolyte was prepared by mixing a ceramic compound such as an oxide or a lithium salt with a polymer matrix having a crosslinked structure or the like. However, such a composite solid electrolyte may exhibit a problem in reducing the dispersibility and ionic conductivity of the ceramic compound or the like when the oxide-based ceramic particles in the polymer matrix are unevenly distributed or when a polymer including a highly crystalline unit such as polyethylene oxide or polypropylene oxide is used as the polymer. In particular, there is a limit to the uniform improvement of ionic conductivity due to the occurrence of aggregation between particles of the ceramic compound or the like.

Thus, the present inventors have produced a composite solid electrolyte including a polymer in which a ceramic compound or the like is uniformly dispersed between polymer chains, by mixing a PEO (polyethylene oxide)-based copolymer having a branched and non-crosslinked structure including a specific unit with a ceramic compound and a lithium salt, then forming a film and drying it.

In particular, the polymer matrix can exhibit excellent dispersibility to ceramic compounds or the like, and as a result, a composite solid electrolyte exhibiting excellent ionic conductivity, and the like can be produced through a simplified process without the use of a separate plasticizer or dispersant.

Therefore, according to certain embodiments of the disclosure, it has been confirmed that a composite solid electrolyte exhibiting improved ionic conductivity compared to conventional composite solid electrolytes can be produced and provided through a simplified process, thereby completing the invention.

The composite solid electrolyte according to certain embodiments will be described in detail below.

### Composite solid electrolyte

A composite solid electrolyte according to certain embodiments of the disclosure comprises: a polymer including a non-crosslinkable PEO (polyethylene oxide)-based copolymer having a predetermined branched structure; a lithium salt; and a ceramic compound, wherein the lithium salt and the ceramic compound are dispersed in the polymer.

In such a composite solid electrolyte, the non-crosslinkable PEO-based copolymer having the branched structure does not have a crosslinkable functional group, and at least some of the PEO-based repeating units have a branched chain including an alkylene oxide repeating structure. The structure of such a branched chain can be defined as, for example, -CH₂-O-(CH₂-CH₂-O)ₖ-R₃ (where k is 0 to 20, and R₃ represents an alkyl group having a carbon number from 1 to 5), and such a branched chain can be bonded to the main chain of some of the PEO-based repeating units. In more specific embodiments, the branched, non-crosslinkable PEO-based copolymer can be one that does not include an additional polymer unit such as a polypropylene oxide (PPO)-based unit.

In the structure of the copolymer, the branched chain may be a substituent that acts as a kind of plasticizer. Therefore, it is possible to induce uniform dispersion of a ceramic compound or the like in the polymer including the copolymer. As a result, the composite solid electrolyte of certain embodiments can exhibit excellent ionic conductivity even when a relatively small amount of ceramic compound is used, without the use of additional additives such as a separate plasticizer or dispersant. Furthermore, since the copolymer does not include an additional polymer unit such as a PPO-based unit, the physical properties of the composite solid electrolyte, such as impact resistance, can also be excellently maintained.

In more specific embodiments, the non-crosslinkable PEO-based copolymer having the branched structure may be a copolymer including repeating units of the following Formulas 1 and 2: 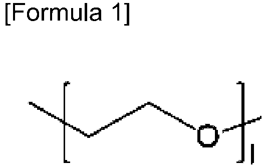 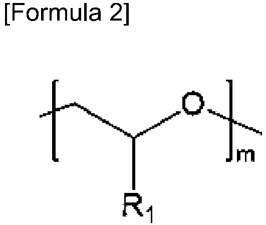
wherein in Formulas 1 and 2, R₁ represents -CH₂-O-(CH₂-CH₂-O)ₖ-R₃, where k is 0 to 20, and R₃ represents an alkyl group having a carbon number from 1 to 5, and
l and m are the number of the repeating units, and are each independently an integer from 1 to 100000.

For example, the branched chain of the R₁ induces uniform dispersion of a ceramic compound or the like as described above, so that the composite solid electrolyte of certain embodiments can exhibit more improved ionic conductivity.

In the copolymer, if the l and m are too small, it is difficult to form a polymer because the molecular weight is small, and in particular, if the repeating unit of the Formula 2 is not included, the ionic conductivity of the composite solid electrolyte of certain embodiments may be reduced. If the l and m are too large, the viscosity increases, which results in a decrease in solubility during the preparation of the polymer solution, and molding for preparing a solid electrolyte may become difficult.

The weight average molecular weight (Mw) of the copolymer including the Formulas 1 and 2 may be 100,000 g/mol to 4,000,000 g/mol. Specifically, it may be 100,000 g/mol or more, 200,000 g/mol or more, or 300,000 g/mol or more, and 3,000,000 g/mol or less, or 2,000,000 g/mol or less. If the weight average molecular weight (Mw) of the copolymer is too small, the mechanical properties of the produced solid electrolyte may not be satisfactory. If the weight average molecular weight (Mw) of the copolymer is too large, the solubility may decrease when preparing a polymer solution due to an increase in viscosity and molding during producing a solid electrolyte may become difficult. Additionally, the ionic conductivity of the composite solid electrolyte may decrease due to increased crystallinity and decreased chain mobility inside the solid electrolyte.

Additionally, the copolymer may be a random copolymer or a block copolymer.

According to one specific embodiment of the disclosure, the composite solid electrolyte may further include a lithium salt. The lithium salt may be contained in a dissociated ion state in the internal space between polymer chains, thereby improving the ionic conductivity of the composite solid electrolyte. At least a portion of the cations and/or anions dissociated from the lithium salt remain in a state bound to the polymer chains, and can exhibit mobility during charging/discharging of a battery.

The lithium salt may include one or more selected from the group consisting of (CF₃SO₂)₂NLi(Lithium bis(trifluoromethanesulphonyl)imide, LiTFSI), (FSO₂)₂NLi(Lithium bis(fluorosulfonyl)imide, LiFSI), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, LiC(CF₃SO₂)₃, lithium chloroborane, lithium lower aliphatic carboxylate and lithium tetraphenyl borate.

Further, the lithium salt may be included in an amount of 10 to 40 parts by weight, based on 100 parts by weight of the branched and non-crosslinkable PEO-based copolymer. Specifically, it may be included in an amount of 15 parts by weight or more, or 20 parts by weight or more, or 40 parts by weight or less or 38 parts by weight or less. If the content of the lithium salt is less than 10 parts by weight, the ionic conductivity of the composite solid electrolyte may decrease, and if the content of the lithium salt exceeds 40 parts by weight, the mechanical strength may decrease.

According to one specific embodiment of the disclosure, the composite solid electrolyte may include a ceramic compound. The ceramic compound has a lithium ion transfer ability to improve the conductivity of lithium ions, and preferably contains lithium atoms but does not store lithium, and has the function of transporting lithium ions, and can improve the ionic conductivity of the composite solid electrolyte.

In addition, the ceramic compound may be included in a uniformly dispersed state in the non-crosslinked and branched polymer. The ceramic compound can be uniformly dispersed without aggregation between polymer chains due to the branched chain structure of the polymer. Such ceramic compounds can be advantageous in improving the mechanical strength and ionic conductivity of the composite solid electrolyte due to its uniformly dispersed form.

Further, the ceramic compound may be in the form of particles. Due to the morphological characteristics of particles, they can be contained in a more uniformly dispersed state within the composite solid electrolyte. The particles of the ceramic compound may be spherical, and its diameter may be 100 nm to 1000 nm. If the diameter is less than 100 nm, the effect of non-crystallization due to the decrease in crystallinity of the polymer may be slight, and if the diameter is more than 1000 nm, dispersibility may decrease due to an increase of aggregation between particles, which may make it difficult to disperse uniformly.

The ceramic compound may be an oxide-based or phosphate-based compound, for example, an oxide-based solid electrolyte in the form of lithium metal oxide or lithium metal phosphate. However, considering the suitable dispersibility of the ceramic compound and the excellent ion conductivity of the solid electrolyte, the oxide-based solid electrolyte in the form of lithium metal phosphate can be more suitably used.

More specifically, the ceramic compound may be one or more selected from the group consisting of garnet-type lithium-lanthanum-zirconium oxide(LLZO, Li₇La₃Zr₂O₁₂)-based compound, perovskite-type lithium-lanthanum-titanium oxide(LLTO, Li₃ₓLa_{2/3-x}TiO₃)-based compound, phosphate-based NASICON type lithium-aluminum-titanium phosphate(LATP, Li₁₊ₓAlₓTi₂₋ₓ(PO₄)₃)-based compound, lithium-aluminum-germanium phosphate(LAGP, Li_{1.5}Al_{0.5}Ge_{1.5}(PO₄)₃)-based compound, lithium-silicon-titanium phosphate(LSTP, LiSiO₂TiO₂(PO₄)₃)-based compound, and lithium-lanthanum-zirconium-titanium oxide (LLZTO)-based compound. More preferably, at least one oxide-based solid electrolyte selected from the group consisting of lithium-lanthanum-zirconium oxide(LLZO), lithium-silicon-titanium phosphate(LSTP), lithium-lanthanum-titanium oxide(LLTO), lithium-aluminum-titanium phosphate(LATP), lithium-aluminum-germanium phosphate(LAGP), and lithium-lanthanum-zirconium-titanium oxide(LLZTO) may be used. Among these compounds, one or more selected from the group consisting of lithium-silicon titanium phosphate (LSTP) compounds, lithium-aluminum-titanium phosphate (LATP) compounds, and lithium-aluminum-germanium phosphate (LAGP) compounds having the lithium metal phosphate form can be more suitably used from the viewpoint of the ionic conductivity or the like of the solid electrolyte.

The oxide-based solid electrolyte generally has an ionic conductivity value of up to 10⁻⁴ ~ 10⁻³ S/cm at room temperature, and has the advantage of being stable in a high voltage region, being stable in air, and thus being easy to synthesize and handle.

Further, the ceramic compound does not easily cause combustion or ignition phenomenon even under high temperature conditions of 400°C or more, and thus has increased high-temperature stability. Therefore, when the composite solid electrolyte contains a ceramic compound, not only the mechanical strength but also the high-temperature stability and ionic conductivity of the composite solid electrolyte can be improved.

The ceramic compound may be included in an amount of 10 parts by weight to 45 parts by weight, or 20 parts by weight to 40 parts by weight based on 100 parts by weight of the PEO-based copolymer including the non-crosslinkable functional group.

When the ceramic compound is included in an amount below the above mentioned range, the effect of lowering the crystallinity of the polymer and making it amorphous due to the ceramic compound may be reduced, so that the effect of increasing the ionic conductivity of the composite solid electrolyte is not significant, and the mechanical properties may also not reach the expected level due to the formation of a composite.

When the ceramic compound is included in an amount that exceeds the above mentioned range, the ceramic compound may not be uniformly dispersed within the polymer, which may cause the ceramic compound particles to clump together and aggregate, resulting in the production of a composite solid electrolyte with reduced ionic conductivity.

The composite solid electrolyte according to one specific embodiment described above can be provided in a dry film state that does not include a liquid such as an organic solvent or an electrolyte solution, and can exhibit excellent ionic conductivity in this dry film state. As a result, the composite solid electrolyte can greatly contribute to the provision of an all-solid-state battery exhibiting excellent electrical properties.

### Method for producing composite solid electrolyte

The method for producing the composite solid electrolyte described above may comprise the steps of: forming a mixed solution including a polymer containing a non-crosslinkable PEO (polyethylene oxide)-based copolymer having a branched structure containing repeating units of the Formulas 1 and 2; a lithium salt and a ceramic compound; and casting the mixed solution and drying it to mold in the form of a film.

In the production method, due to the excellent dispersibility of the copolymer, etc., a composite solid electrolyte can be produced through a simplified method in which a polymer matrix containing the copolymer is mixed with a ceramic compound or the like to form a solution or dispersion, which is then formed in the form of a film.

In such a production method, the non-crosslinkable PEO-based copolymer having the branched structure has already been described above, and therefore further description will be omitted.

In one specific embodiment of the disclosure, the lithium salt and the ceramic compound may be the same as those used in the composite solid electrolyte described above, and the content thereof may also be used in the same way.

In the step of forming a mixed solution, a mixed solution containing a polymer including the PEO-based copolymer, a lithium salt, and a ceramic compound can be coated onto a substrate to form a coating film. At this time, the mixed solution may be prepared by mixing the PEO -based copolymer, the lithium salt, and the ceramic compound in a solvent.

The solvent is not particularly limited as long as it is a solvent that can be dissolved with the PEO-based copolymer and the lithium salt, and can be easily removed by a drying process. For example, the solvent may be acetonitrile, methanol, ethanol, tetrahydrofuran, water, isopropyl alcohol, dimethyl sulfoxide(DMSO), N-methyl-2-pyrrolidone(NMP), N,N-dimethyl formamide(DMF) or the like.

The concentration of the mixed solution can be appropriately adjusted in consideration of the extent to which the molding process for producing the polymer solid electrolyte can proceed smoothly. Specifically, the concentration of the mixed solution may mean the concentration (w/w%) of the PEO-based copolymer in the mixed solution. For example, the concentration of the mixed solution may be 5% to 20%, and specifically, it may be 5% or more, 7% or more, or 9% or more, and 13% or less, 17% or less, or 20% or less. If the concentration of the mixed solution is less than 5%, the concentration may be too diluted, and the mechanical strength of the composite solid electrolyte may decrease, or it may flow down when coated onto a substrate. If the concentration of the mixed solution is more than 20%, it will be difficult to dissolve the lithium salt at the desired concentration in the mixed solution, the viscosity will be high, and the solubility will be low, which makes it difficult to coat the lithium salt in the form of a uniform thin film.

The substrate is not particularly limited as long as it can function as a support for the coating film. For example, the substrate may SUS (stainless use steel), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-ethyl acrylate copolymer film, ethylene-methyl acrylic acid copolymer film or polyimide film.

Further, the coating method is not particularly limited as long as it can form a coating film by coating the mixed solution onto the substrate. For example, the coating method may be bar coating, roll coating, spin coating, slit coating, die coating, blade coating, comma coating, slot die coating, lip coating, spray coating or solution casting.

The coating film formed on the substrate by the coating method can be molded into a solid electrolyte film from which the residual solvent is completely removed through a drying process. The drying can be performed separately by a first drying process and a second drying process in order to prevent shrinkage of the film due to rapid evaporation of the solvent. The first drying process can remove part of the solvent through room temperature drying, and the second drying process can completely remove the solvent through vacuum high temperature drying. The high temperature drying may be performed at a temperature of 80°C to 130°C. If the high-temperature drying temperature is less than 80°C, the residual solvent cannot be completely removed, and if the high-temperature drying temperature is more than 130°C, the film shrinks which makes it difficult to form uniform electrolyte membranes.

Throught the production method as described previously, it is possible to produce a composite solid electrolyte of one specific embodiment in which a ceramic compound is uniformly dispersed between branched and non-crosslinked polymer chains.

### All-solid-state battery

Additional aspects of the disclosure also relate to an all-solid-state battery comprising an electrolyte layer including the composite solid electrolyte, wherein the all-solid-state battery comprises: a positive electrode including a positive electrode active material; a negative electrode including a negative electrode active material; and an electrolyte layer interposed between the positive electrode and the negative electrode and including the composite solid electrolyte. At this time, the electrolyte layer may include the composite solid electrolyte of one specific embodiment.

Specifically, the composite solid electrolyte includes a polymer including a branched and non-crosslinkable PEO (polyethylene oxide)-based copolymer, a lithium salt, and a ceramic compound. The ceramic compound or the like is uniformly dispersed in the polymer, thereby exhibiting improved ionic conductivity, which may be suitable as an electrolyte for an all-solid-state battery.

Meanwhile, the positive electrode included in the all-solid-state battery includes a positive electrode active material layer, and the positive electrode active material layer may be formed on at least one surface of the positive electrode current collector.

The positive electrode active material layer includes a positive electrode active material, a binder, and a conductive material.

Further, the positive electrode active material is not particularly limited as long as it is a material capable of reversibly absorbing and desorbing lithium ions, and examples thereof may be a layered compound, such as lithium cobalt oxide, lithium nickel oxide, Li[NiₓCo_{y}Mn_{z}Mᵥ]O₂ (where M is any one selected from the group consisting of Al, Ga, and In, or two or more elements thereof; and 0.3≤x<1.0, 0≤y, z≤0.5, 0≤v≤0.1, and x+y+z+v=1), Li(LiₐM_{b-a-b'}M'_{b'})O_{2-c}A_{c}(where 0≤a≤0.2, 0.6≤b≤1, 0≤b'≤0.2, and 0≤c≤0.2 ; M includes Mn and at least one selected from the group consisting of Ni, Co, Fe, Cr, V, Cu, Zn and Ti; M' is at least one selected from the group consisting of Al, Mg, and B; and A is at least one selected from the group consisting of P, F, S, and N), or a compound substituted with one or more transition metals; lithium manganese oxides such as the formula Li_{1+y}Mn_{2-y}O₄ (where y ranges from 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni-site type lithium nickel oxide expressed by the formula LiNi_{1-y}M_{y}O₂ (where M is Co, Mn, Al, Cu, Fe, Mg, B, or Ga, and y ranges from 0.01 to 0.3); lithium manganese complex oxide expressed by the formula LiMn_{2-y}M_{y}O₂ (where M is Co, Ni, Fe, Cr, Zn, or Ta, and y ranges from 0.01 to 0.1) or Li₂Mn₃MO₈ (where M is Fe, Co, Ni, Cu, or Zn); LiMn₂O₄ having a part of Li being substituted with alkaline earth metal ions; a disulfide compound; Fe₂(MoO₄)₃, and the like, but are not limited thereto.

Further, the positive electrode active material may be included in an amount of 40 to 80% by weight, based on the total weight of the positive electrode active material layer. Specifically, the content of the positive electrode active material may be 40% by weight or more or 50% by weight or more, and 70% by weight or less or 80% by weight or less. If the content of the positive electrode active material is less than 40% by weight, the connectivity and electrical properties between positive electrode active materials may be insufficient, and if the content of the positive electrode active material is more than 80% by weight, the mass transfer resistance may increase.

Further, the binder is a component assisting in binding between the positive electrode active material and the conductive material, and in binding with the current collector. The binder may include one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder may include one or more selected from the group consisting of styrene-butadiene rubber, polytetrafluoroethylene, carboxymethylcellulose, polyacrylic acid, lithium polyacrylate and polyvinylidene fluoride.

Further, the binder may be included in an amount of 1% by weight to 30% by weight, based on the total weight of the positive electrode active material layer. Specifically, the content of the binder may be 1% by weight or more or 3% by weight or more, and 15% by weight or less or 30% by weight or less. If the content of the binder is less than 1% by weight, the adhesion between the positive electrode active material and the positive electrode current collector may decrease, and if the content of the binder is more than 30% by weight, the adhesion is improved, but the content of the positive electrode active material is reduced accordingly, which may result in a decrease in battery capacity.

Further, the conductive material is not particularly limited as long as it does not cause side reactions in the internal environment of the all-solid-state battery and does not cause chemical changes in the battery but has excellent electrical conductivity. The conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; electrically conductive polymers such as polyphenylene derivatives; and a mixture of two or more thereof.

The conductive material may typically be included in an amount of 0.5% by weight to 30% by weight, based on the total weight of the positive electrode active material layer. Specifically, the content of the conductive material may be 0.5% by weight or more or 1% by weight or more, and 20% by weight or less, or 30% by weight or less. If the content of the conductive material is too low, that is, less than 0.5% by weight, it is difficult to obtain an effect on the improvement of the electrical conductivity, or the electrochemical characteristics of the battery may be deteriorated. If the content of the conductive material is too high, that is, more than 30% by weight, the amount of positive electrode active material is relatively small and thus capacity and energy density may be lowered. The method of incorporating the conductive material into the positive electrode is not particularly limited, and conventional methods known in the related art such as coating on the positive electrode active material can be used.

In addition, the positive electrode current collector supports the positive electrode active material layer and serves to transfer electrons between the external conductor and the positive electrode active material layer.

The positive electrode current collector is not particularly limited so long as it does not cause chemical changes in the all-solid-state battery and has conductivity. For example, the positive electrode current collector may be made of copper, stainless steel, aluminum, nickel, titanium, palladium, fired carbon, copper or stainless steel that is surface-treated with one of carbon, nickel, titanium, silver, or the like, an aluminum-cadmium alloy, or the like.

The positive electrode current collector may have a fine protrusion and depression structure layer or may adopt a three-dimensional porous structure in order to improve bonding strength with the positive electrode active material layer. Thereby, the positive electrode current collector may be used in any of various forms including a film, a sheet, a foil, a mesh, a net, a porous body, a foaming body, and a non-woven fabric structure.

The positive electrode as described above can be prepared according to conventional methods. Specifically, the positive electrode can be prepared by a process in which a composition for forming a positive electrode active material layer, which is prepared by mixing a positive electrode active material, a conductive material, and a binder in an organic solvent, is coated and dried on a positive electrode current collector, and optionally, compression molding is performed on the current collector to improve the electrode density. At this time, as the organic solvent, a solvent that can uniformly disperse the positive electrode active material, binder, and conductive material, and that evaporates easily, is preferably used. Specifically, acetonitrile, methanol, ethanol, tetrahydrofuran, water, isopropyl alcohol, dimethyl sulfoxide(DMSO), N-methyl-2-pyrrolidone(NMP), and the like can be mentioned.

On the other hand, the negative electrode contained in the all-solid-state battery includes a negative electrode active material layer, and the negative electrode active material layer may be formed on one surface of the negative electrode current collector. The negative electrode active material layer may include a negative electrode active material, a conductive material, and a binder.

The negative electrode active material may include a material capable of reversible intercalation and deintercalation of lithium (Li⁺), a material that can react with lithium ions to reversibly form a lithium-containing compound, lithium metal or lithium alloy.

The material capable of reversible intercalation and deintercalation of lithium ions (Li⁺) may be , for example, crystalline carbon, amorphous carbon, or a mixture thereof. The material that can react with the lithium ion (Li⁺) to reversibly form a lithium-containing compound may be, for example, tin oxide, titanium nitrate , or silicon. The lithium alloy, for example, may be an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be included in an amount of 40 to 80% by weight based on the total weight of the negative electrode active material layer. Specifically, the content of the negative electrode active material may be 40% by weight or more or 50% by weight or more, and 70% by weight or less or 80% by weight or less. When the content of the negative electrode active material is less than 40% by weight, the electrical properties may be not sufficient, and if the content of the negative electrode active material is more than 80% by weight, the mass transfer resistance may increase.

Further, the binder is the same as described above for the positive electrode active material layer.

Further, the conductive material is the same as described above for the positive electrode active material layer.

Further, the negative electrode current collector is not particularly limited so long as it does not cause chemical changes in the corresponding battery and has conductivity. For example, the negative electrode current collector may be made of copper, stainless steel, aluminum, nickel, titanium, fired carbon, copper or stainless steel that is surface-treated with one of carbon, nickel, titanium, silver, or the like, an aluminum-cadmium alloy, or the like. Further, similar to the positive electrode current collector, the negative electrode current collector may be used in various forms such as a film, a sheet, a foil, a net, a porous body, a foaming body, and a non-woven fabric structure, which fine protrusions and depressions are formed on a surface thereof.

The preparation method of the negative electrode is not particularly limited, and the negative electrode can be produced by forming a negative electrode active material layer on a negative electrode current collector using a layer or film forming method commonly used in the art. For example, methods such as compression, coating, and deposition can be used. Further, the negative electrode of the present disclosure also includes a case in which a battery is assembled in a state where a lithium thin film does not exist on the negative electrode current collector, and then a metallic lithium thin film is formed on a metal plate through initial charging.

According to still another embodiment, there are provided a battery module including the all-solid-state battery as a unit cell, a battery pack including the battery module, and a device including the battery pack as a power source.

Specific examples of the device may include, but are not limited to, power tools driven by an electric motor; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

Hereinafter, preferred examples are presented to help understand the invention, but the following examples are provided only to make the invention easier to understand and the invention is not limited thereto.

### Example

### Examples 1 to 3 and Comparative Example 1: Production of composite solid electrolyte

A polyethylene oxide (PEO)-based copolymer represented by the following Formula 1a was prepared: 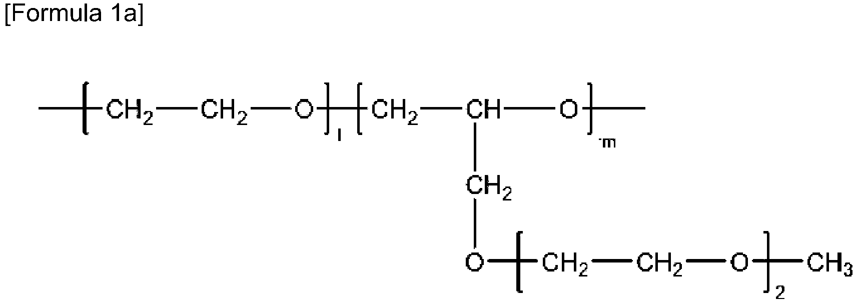 wherein in Formula 1a, the ratio of l : m is 85:15, and the weight average molecular weight (Mw) of the copolymer is about 2,000,000 g/mol.

The polyethylene oxide copolymer was mixed with LiTFSI as a lithium salt, and then acetonitrile solvent was added thereto to prepare a polymer solution, which was then stirred using a magnetic bar for 24 hours. The prepared polymer solution was mixed with LSTP as a ceramic compound to prepare a mixed solution of the polymer and the ceramic compound. The mixed solution was repetitively stirred using a paste mixer at 1500 rpm for 3 minutes 5 times. At this time, the mixed solution of the non-crosslinkable copolymer matrix and the ceramic compound was constituted such that 36 pts.wt. of LiTFSI as a lithium salt, and 10 pts.wt. (Example 1), 20 pts.wt. (Example 2), 40 pts.wt. (Example 3), and 60 pts.wt. (Comparative Example 1) of LSTP as a ceramic compound were respectively mixed relative to 100 pts.wt. of the polymer matrix. The acetonitrile solvent was used so that the concentration of the polymer matrix-ceramic compound was 16.7 wt.%. The prepared mixed solution was cast on a coin cell lower substrate, first dried at room temperature for 12 hours, and then secondarily dried in a vacuum oven at 100°C for 12 hours to form a composite solid electrolyte film having a thickness of 200 µm.

### Comparative Examples 2 to 4: Production of composite solid electrolyte

A polyethylene oxide (PEO)-based copolymer represented by the following Formula 1b was prepared: 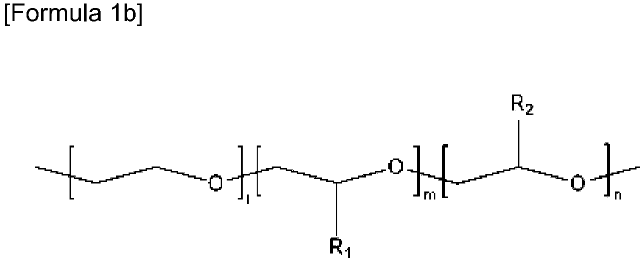 wherein in Formula 1b, R₁ is -CH₂-O-(CH₂-CH₂-O)ₖ-CH₃, R₂ is -CH₂-O-CH₂-CH= CH₂, k is 2, the ratio of l:m:n was 85:13:2, and the weight average molecular weight (Mw) of the copolymer was about 2,000,000 g/mol.

The copolymer of the Formula 1b has an allyl group bonded through a methylene oxide linker as a crosslinkable functional group.

The polyethylene oxide copolymer was mixed with acetonitrile as a solvent, trimethylolpropane trimethacrylate as a crosslinking agent, benzoyl peroxide as an initiator, LiTFSI as a lithium salt and LSTP as a ceramic compound to prepare a mixed solution of the polyethylene oxide copolymer and ceramic compound, and then stirred using a magnetic bar for 24 hours. At this time, the mixed solution of the polyethylene oxide copolymer and ceramic compound was constituted such that 20 pts.wt. of trimethylolpropane trimethacrylate as a crosslinking agent, 1 pt.wt. of benzoyl peroxide as an initiator, 36 pts.wt. of LiTFSI as a lithium salt, and 0 pt.wt. (Comparative Example 2), 10 pts.wt. (Comparative Example 3), and 80 pts.wt. (Comparative Example 4) of LSTP as a ceramic compound were mixed relative to 100 pts.wt. of polyethylene oxide copolymer. The acetonitrile solvent was used so that the concentration of the polymer, i.e., polyethylene oxide copolymer, included in the mixed solution of the polymer and ceramic compound, was 11.1 wt.%, and the concentration of the polyethylene oxide and ceramic compound was 14.9 wt.%.

The prepared mixed solution was cast on a lower substrate of a coin cell, first dried at room temperature for 12 hours, and then secondarily dried in a vacuum oven at 100°C for 12 hours to form an electrolyte film having a thickness of 200 µm, thereby producing a composite solid electrolyte.

### Experimental Example

### Experimental Example 1: Measurement of ionic conductivity of solid electrolyte

In order to measure the ionic conductivity of the solid electrolyte produced in Examples and Comparative Examples, the solid electrolyte was formed on the lower substrate of the coin cell with a size of 1.7671 cm², and then SUS was used as an inactive electrode (blocking electrode) to prepare the coin cell for measuring the ionic conductivity.

Resistance was measured using an electrochemical impedance spectrometer (EIS, VM3, Bio Logic Science Instrument) at 25°C with an amplitude of 10 mV and a scan range of 1Hz to 0.1 MHz, and then the ionic conductivity of the solid electrolyte was calculated using Equation 1 below. ${σ}_{i} = \frac{L}{RA}$ wherein, in Equation 1, σᵢ is the ionic conductivity (S/cm) of the solid electrolyte, R is the resistance (Ω) of the solid electrolyte measured with the electrochemical impedance spectrometer, L is the thickness of the solid electrolyte (in µm ), and A is the area of the solid electrolyte (in cm²).

Table 1 below shows the calculated ionic conductivity values.

**[Table 1]**

| | Ionic conductivity (S/cm, @25°C) |
|---|---|
| Example 1 | 7.8x10⁻⁵ |
| Example 2 | 2.1x10⁻⁴ |
| Example 3 | 1.3x10⁻⁴ |
| Comparative Example 1 | 3.6x10⁻⁵ |
| Comparative Example 2 | 2.3x10⁻⁵ |
| Comparative Example 3 | 3.6x10⁻⁵ |
| Comparative Example 4 | 1.8x10⁻⁵ |

As shown in Table 1, it was confirmed that the composite solid electrolytes of Examples, which were produced using the branched and non-crosslinkable PEO and a certain content of a ceramic compound, etc., exhibits improved ionic conductivity compared to the solid electrolyte of Comparative Example 1, which was outside the appropriate content range of the ceramic compound, or Comparative Examples 2 to 4, which was produced using a crosslinkable PEO.

## Claims

1. A composite solid electrolyte comprising: a polymer including a non-crosslinkable PEO (polyethylene oxide)-based copolymer having a branched structure containing repeating units of the following Formulas 1 and 2; a lithium salt; and a ceramic compound,
wherein the lithium salt and the ceramic compound are dispersed in the polymer, and
wherein the ceramic compound is included in an amount of 10 to 45 parts by weight based on 100 parts by weight of the polymer, 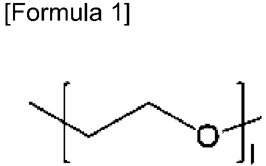 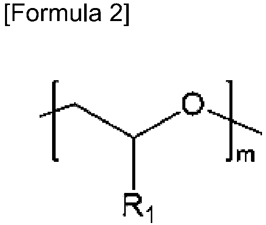
wherein in Formulas 1 and 2, R₁ represents -CH₂-O-(CH₂-CH₂-O)ₖ-R₃, where k is 0 to 20, and R₃ represents an alkyl group having a carbon number from 1 to 5, and
l and m are the number of the repeating units, and are each independently an integer from 1 to 100000.

2. The composite solid electrolyte of claim 1, wherein
the ceramic compound comprises an oxide-based solid electrolyte of lithium metal oxide or lithium metal phosphate.

3. The composite solid electrolyte of claim 1, wherein the ceramic compound comprises one or more oxide-based solid electrolytes selected from the group consisting of a lithium-lanthanum-zirconium oxide (LLZO) compound, a lithium-silicon-titanium phosphate based (LSTP) compound, a lithium-lanthanum-titanium oxide based (LLTO) compound, a lithium-aluminum-titanium phosphate based (LATP) compound, a lithium-aluminum-germanium phosphate based (LAGP) compound, and a lithium-lanthanum-zirconium-titanium oxide-based (LLZTO) compound.

4. The composite solid electrolyte of claim 1, wherein the lithium salt is included in an amount of 10 to 40 parts by weight based on 100 parts by weight of the polymer.

5. The composite solid electrolyte of claim 1, having a dry film state that does not contain a liquid.

6. A method for producing a composite solid electrolyte of claim 1, the method comprising the steps of:
forming a mixed solution including a polymer including a non-crosslinkable PEO (polyethylene oxide)-based copolymer having a branched structure containing repeating units of the Formulas 1 and 2; a lithium salt; and a ceramic compound; and
casting the mixed solution and drying it to mold in the form of a film.

7. An all-solid-state battery comprising an electrolyte layer including a composite solid electrolyte of any one of claims 1 to 5.

8. The all-solid-state battery of claim 7, comprising: a positive electrode including a positive electrode active material; a negative electrode including a negative electrode active material; and an electrolyte layer interposed between the positive electrode and the negative electrode and including the composite solid electrolyte.
